# FASCICULE DE BREVET EUROPEEN

(11) **EP 2 587 700 B1**
(45) Date de publication et mention de la délivrance du brevet: **19.12.2018**
(21) Numéro de dépôt: 12189897.7
(22) Date de dépôt: 25.10.2012
(51) Int. Cl.: H04J 13/00, H04N 21/61, H04H 60/90

(54) **Installation d'émission/réception de signaux radioélectriques**
Installation für die Aussendung/ den Empfang von Funksignalen
Installation for emission/reception of radio signals

(30) Priorité: 27.10.2011 FR 1159759
(43) Date de publication de la demande: 01.05.2013
(73) Titulaire: Eutelsat S.A., 75015 Paris (FR)
(72) Inventeur: Arcidiacono, Antonio, 75016 Paris (FR); Finocchiaro, Daniele Vito, 75015 Paris (FR)
(74) Mandataire: Lebkiri, Alexandre

(56) Documents cités:
- WO-A1-96/26597
- WO-A2-02/01781
- US-A1- 2001 013 133

## Description

La présente invention concerne une installation d'émission/réception de signaux radioélectriques hyperfréquences.

Actuellement, la diffusion de programmes de télévision numérique par voie terrestre (par exemple selon l'une des normes DVB-T, DVB-T2 ou DVB-T2-lite) est largement utilisée à travers le monde. De nombreux dispositifs sont installés chez des millions d'utilisateurs. Les dispositifs installés sont majoritairement des dispositifs de réception qui comportent une unité extérieure incluant une antenne de réception (par exemple une antenne « râteau » réceptrice) qui transmet des signaux radioélectriques hyperfréquences modulés à une unité intérieure communément appelée décodeur de télévision numérique terrestre ou encore STB (« Set Top Box » en anglais) par l'intermédiaire d'un câble coaxial. Le décodeur comprend un bloc de démodulation DVB-T ou DVB-T2 qui extrait un signal modulé « utile » dans le signal modulé transmis sur le câble coaxial et démodule le signal « utile » extrait. Le signal « utile » démodulé peut, par exemple, être utilisé pour l'affichage d'images vidéo sur un écran de télévision.

Les offres de diffusion de programmes de télévision numérique par voie terrestre sont aujourd'hui essentiellement purement passives, c'est-à-dire unidirectionnelles (« one-way service » en anglais).

Il peut toutefois s'avérer utile de pouvoir offrir des services nécessitant une voie retour ; c'est le cas par exemple des services interactifs (votes, consommation de contenus à accès conditionnel par échange de clefs, commandes de nouveaux services tels que de la vidéo à la demande). En outre, cette voie retour peut trouver des applications particulièrement intéressantes dans le domaine des communications de machine à machine (« Machine to machine » en anglais) ou M2M pour contrôler certains appareils (alarme, chauffage,...) et/ou récupérer des données mesurées par des capteurs présents au sein des foyers.

Une solution connue à ce problème consiste à utiliser une voie retour utilisant une connexion de type ADSL fournie par des opérateurs de téléphonie fixe (RTC ou « Réseau Téléphonique Commuté ») ou une connexion de type GPRS/UMTS fournie par des opérateurs de téléphonie mobile. Cette solution nécessite donc du matériel supplémentaire important et coûteux ainsi qu'un abonnement additionnel ; par ailleurs, la commutation téléphonique n'est pas particulièrement adaptée à la transmission de messages peu volumineux tels que des messages de vote ou de commande. L'utilisation d'une solution plus appropriée, comme la technologie DVB-RCT (décrite dans le standard européen ETSI EN 301 958), a échoué pour des raisons de coût de l'infrastructure nécessaire.

Les documents WO 96/26597 A1 « Antenna Apparatus and Method in Satellite Reverse Path Communication in Direct-to-Home Subscription Information Systems », WO 02/01781 A2 « A process for supplying video from a headend » et US 2001/013133 A1 « Transmission system between a distribution center and a subscriber » sont connus de l'état de la technique.

Dans ce contexte, la présente invention vise à fournir une installation de réception de signaux radioélectriques hyperfréquences par voie terrestre permettant également d'assurer l'émission en voie retour de signaux radioélectriques hyperfréquences de façon efficace en termes de performances, facilement adaptable à une installation préexistante, évolutive et peu coûteuse.

A cette fin, l'invention propose une installation d'émission/réception de signaux radioélectriques hyperfréquences comportant :
- une unité d'émission/réception comportant :
   ∘ des moyens aptes à recevoir des signaux électriques, dits signaux électriques terrestres, issus de la transformation de signaux radioélectriques reçus par voie hertzienne terrestre ;
   ∘ des moyens pour transformer des signaux électriques modulés selon un protocole à étalement de spectre, dits signaux électriques satellitaires, en signaux radioélectriques aptes à être émis par voie satellitaire ;
   ∘ des moyens d'émission vers un satellite desdits signaux radioélectriques hyperfréquences obtenus après transformation desdits signaux électriques satellitaires ;
   ∘ des moyens d'amplification desdits signaux électriques satellitaires ;
- un boîtier incluant un modulateur de signaux électriques selon un protocole à étalement de spectre ;
- un câble coaxial reliant l'unité d'émission/réception et le boîtier apte à :
   ∘ véhiculer lesdits signaux électriques terrestres de ladite unité d'émission/réception vers ledit boîtier ;
   ∘ véhiculer les signaux électriques issus dudit modulateur selon un protocole à étalement de spectre dudit boîtier vers ladite unité d'émission/réception.

Grâce à l'invention, on utilise avantageusement une installation hybride avec une voie de diffusion terrestre de signaux vers les utilisateurs (par exemple dans une bande de fréquence comprise entre 470 et 862 MHz) et une voie retour satellitaire (bande de fréquences par exemple comprise entre 1.5 et 5 GHz, c'est-à-dire les fréquences de la bande S, l'utilisation de cette bande de fréquence n'étant pas limitative).

Les avantages d'une telle installation sont multiples. On utilise une technologie éprouvée en voie aller de diffusion vers les utilisateurs visant à transmettre des signaux de taille importante tels que des signaux de télévision et une voie retour satellitaire permettant notamment à l'utilisateur d'interagir avec la voie de diffusion et de transmettre des messages assez courts, la technique de modulation étant basée sur un protocole à étalement de spectre telle qu'un protocole asynchrone à accès aléatoire multiple à étalement de bande par modulation du type SPREAD ALOHA utilisant des techniques d'élimination d'interférences. Un tel protocole est par exemple décrit dans le document US2010/0054131 (del Rio Herrero et al.).

Le système selon l'invention permet d'être très facilement (et sans surcoût important) adaptable sur une installation existante dans la mesure où il suffit de venir rajouter l'unité d'émission/réception (préférentiellement à l'extérieur de l'habitation) et le boîtier (préférentiellement à l'intérieur de l'habitation) qui viennent se connecter au câble coaxial existant. En outre, l'antenne d'émission des signaux satellitaires est une antenne (i.e. les moyens d'émission vers un satellite des signaux radioélectriques hyperfréquences) très peu coûteuse omnidirectionnelle ou avec une faible directivité (par exemple un gain d'antenne de moins de 10 dBi). Le signal émis par l'antenne pourra être reçu par un satellite ou un « collecteur » terrestre, selon la fréquence utilisée.

On notera par ailleurs que le système selon l'invention est très évolutif. En effet, il est tout à fait envisageable de commencer à utiliser le système en émettant tous les signaux retour vers un satellite ; à partir du moment où la capacité du satellite n'est plus suffisante, on identifie la ou les zones de service où il y a le plus de messages envoyés. Dès lors, au lieu d'utiliser directement la liaison antenne - satellite, on peut prévoir des « collecteurs » terrestres, c'est-à-dire des stations de réception terrestres, servant de relais et permettant de réduire la charge du satellite. Les signaux émis par les terminaux, sur une fréquence appropriée, seront alors reçus par les collecteurs au lieu du satellite. La capacité peut ainsi être augmentée en fonction du besoin, avec un coût proportionnel au nombre de terminaux déployés et un investissement progressif.

La voie de diffusion terrestre peut être fortement intégrée à la voie retour satellitaire, puisqu'elle peut contenir, dans un des signaux multiplex émis, des informations de signalisation utiles pour le bon fonctionnement de l'installation. Ces informations peuvent inclure des paramètres d'émission à utiliser (fréquence, débit de type « symbol rate », code d'étalement), la charge du système, des clés de sécurité, ainsi que d'autres instructions pour l'installation. Le boîtier contient donc la logique nécessaire pour interpréter l'information présente dans la voie de diffusion terrestre et l'utiliser pour piloter l'émission de signaux. Comme nous le verrons par la suite, l'installation peut également comporter une voie de diffusion satellitaire optionnelle ; dans ce cas, les informations de signalisation peuvent être transmises indifféremment via les signaux satellitaires ou via les signaux terrestres.

L'installation selon l'invention est particulièrement insolite pour l'homme du métier dans la mesure où il était difficile d'imaginer un système hybride terrestre - satellite avec une voie retour satellitaire sans ajout conséquent de matériels induisant un surcoût rédhibitoire pour l'utilisateur. C'est précisément l'utilisation d'une modulation spécifique et d'une antenne peu coûteuse qui permet de rendre attractive l'installation selon l'invention.

L'installation d'émission/réception selon l'invention peut également présenter une ou plusieurs des caractéristiques ci-dessous, considérées individuellement ou selon toutes les combinaisons techniquement possibles :
- ledit modulateur de signaux électriques comporte des moyens de mis en oeuvre d'un protocole à étalement de spectre fonctionnant selon un protocole asynchrone à accès aléatoire multiple à étalement de spectre, éventuellement optimisés pour que le hub satellitaire puisse utiliser des moyens d'élimination d'interférences ;
- lesdits moyens d'émission vers un satellite desdits signaux radioélectriques hyperfréquences obtenus après transformation desdits signaux électriques satellitaires sont une antenne omnidirectionnelle ou avec une faible directivité ;
- ledit modulateur de signaux électriques selon un protocole à étalement de spectre module est apte à moduler les signaux dans une bande de fréquence intermédiaire, ladite unité d'émission réception comportant des moyens pour remonter la fréquence des signaux modulés dans ladite bande de fréquence intermédiaire vers une bande de fréquence d'émission ;
- lesdits moyens pour remonter la fréquence comportent un oscillateur local générant un signal de transposition à une fréquence d'oscillation apte à être ajoutée aux fréquences de ladite bande de fréquence intermédiaire ;
- ledit boîtier comporte des moyens pour extraire un signal d'horloge à partir d'un signal électrique et des moyens pour transmettre ledit signal d'horloge aux dits moyens pour remonter la fréquence de sorte que la fréquence dudit signal d'horloge soit apte à être ajoutée aux fréquences de ladite bande de fréquence intermédiaire ;
- l'installation comporte des moyens pour extraire, à partir des signaux électriques terrestres, des informations de signalisation pour l'établissement des paramètres d'émission.
- lesdits signaux électriques satellitaires sont modulés dans la bande de fréquences d'émission dite bande S, et plus particulièrement dans la bande [1980 MHz ; 2010 MHz] ;
- lesdits moyens de réception de signaux radioélectriques hyperfréquences transmis par voie hertzienne terrestre sont aptes à recevoir des signaux radioélectriques hyperfréquences dans la bande UHF ou VHF;
- ledit boîtier inclut un démodulateur desdits signaux électriques terrestres.
- ledit démodulateur desdits signaux électriques terrestres est apte à démoduler des signaux modulés selon la norme DVB-T ou DVB-T2 ;
- ledit boîtier comporte des moyens de connexion sans fil tels que des moyens WiFi, WiMax, BlueTooth, ZigBee ou KNX ;
- lesdits moyens de connexion sans fil sont aptes à émettre des données démodulées par ledit démodulateur et à recevoir des données à transmettre au dit modulateur ;
- lesdits moyens d'émission vers un satellite desdits signaux radioélectriques hyperfréquences sont également des moyens d'émission vers une station de réception terrestre (« collecteur ») desdits signaux radioélectriques hyperfréquences.

La présente invention a également pour objet une unité d'émission/réception apte à être intégrée dans une installation selon l'invention comportant :
- des moyens aptes à recevoir des signaux électriques, dits signaux électriques terrestres, issus de la transformation de signaux radioélectriques reçus par voie hertzienne terrestre ;
- des moyens pour transformer des signaux électriques modulés selon un protocole à étalement de spectre, dits signaux électriques satellitaires, en signaux radioélectriques aptes à être émis par voie satellitaire ;
- des moyens d'émission vers un satellite desdits signaux radioélectriques hyperfréquences obtenus après transformation desdits signaux électriques satellitaires ;
- des moyens d'amplification desdits signaux électriques satellitaires.

On notera que même si l'unité d'émission/réception est principalement décrite comme un dispositif unique intégrant toutes les fonctionnalités précédemment décrites, il peut également s'agir d'un agencement de plusieurs dispositifs distincts réalisant ces fonctionnalités : on peut ainsi envisager que les moyens d'émission vers le satellite (i.e. l'antenne) ne soient pas directement intégrés au même dispositif.

La présente invention a également pour objet un boîtier apte à être intégré dans une installation selon l'invention comportant un modulateur de signaux électriques selon un protocole à étalement de spectre.

Ledit boîtier comporte avantageusement un démodulateur desdits signaux électriques terrestres.

D'autres caractéristiques et avantages de l'invention ressortiront clairement de la description qui en est donnée ci-dessous, à titre indicatif et nullement limitatif, en référence aux figures annexées, parmi lesquelles :
- la figure 1 représente schématiquement une installation selon un premier mode de réalisation de l'invention ;
- la figure 2 représente schématiquement une installation selon un second mode de réalisation de l'invention.

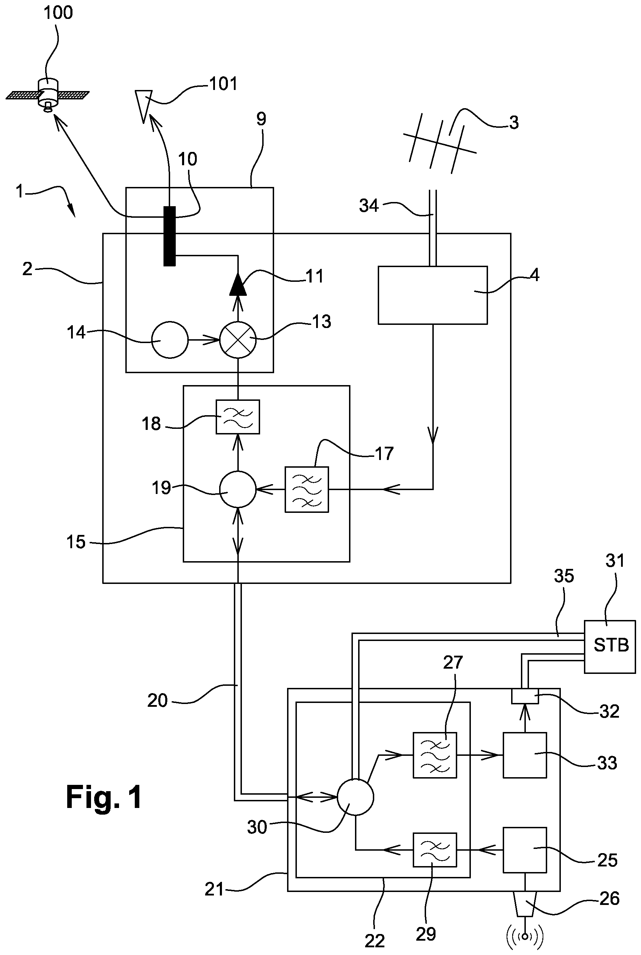

La figure 1 représente schématiquement une installation d'émission/réception 1 selon un premier mode de réalisation de l'invention.

L'installation d'émission/réception 1 est apte à fonctionner avec une antenne hertzienne 3 standard (par exemple une antenne « râteau » se trouvant sur le toit d'un immeuble ou d'une habitation) permettant de recevoir des signaux en bande UHF ou VHF comportant des flux de télévision numérique terrestre codés selon un protocole de type DVB-T ou DVB-T2.

L'installation d'émission/réception 1 comporte :
- une unité d'émission/réception 2 extérieure à la maison ;
- un câble coaxial 20 ;
- un boîtier 21 destiné à être logé à l'intérieur de la maison.

L'antenne hertzienne 3 reçoit des signaux DVB-T ou DVB-T2, par exemple en bande UHF (bande 470 - 862 MHz).

L'unité d'émission/réception 2 comporte :
- des moyens d'entrée 4 aptes à recevoir les signaux électriques terrestres reçues par l'antenne 3 (l'antenne et les moyens d'entrée 4 sont par exemple reliés par un câble coaxial 34) ;
- un bloc d'émission 9 ;
- un multiplexeur de signaux radioélectriques 15.

Le bloc d'émission 9 intègre une voie d'émission TX.

Plus spécifiquement, le bloc d'émission 9 comporte
- une antenne 10 omnidirectionnelle ou quasi omnidirectionnelle (i.e. une antenne avec une faible directivité, par exemple présentant un gain d'antenne de moins de 10 dBi) apte à transformer des signaux électriques en bande S d'émission (par exemple dans la bande [1980 MHz - 2010 MHz]) en signaux radioélectriques hyperfréquences et à transmettre ces signaux vers un satellite 100 en bande S ;
- un amplificateur du type à état solide 11 ou SSPA (« Solid State Power Amplifier ») apte à amplifier un signal électrique dans la bande de fréquences [1980 MHz - 2010 MHz] à une puissance comprise entre 50 mW et 1 W puis à transmettre ce signal amplifié vers l'antenne 10 ; cet amplificateur 11 va amplifier les signaux destinés à être transmis en bande S vers le satellite 100 ;
- un oscillateur local 14 générant un signal de transposition à une fréquence d'oscillation par exemple de 1610 MHz ;
- un mélangeur de fréquence 13 ayant une première entrée pour recevoir des signaux électriques dans une bande de fréquences intermédiaires (par exemple la bande [370 MHz - 400 MHz]) et une seconde entrée pour recevoir le signal généré par l'oscillateur local 14 de sorte qu'il produit un signal électrique dans la bande de fréquence [1980 MHz - 2010 MHz].

Le multiplexeur 15 comporte :
- un filtre passe-bas 18 dont la sortie est reliée à l'entrée du mélangeur de fréquence 13 et l'entrée est reliée à un coupleur hyperfréquences 19; le filtre passe-bas 18 laisse ici passer les fréquences inférieures à 400 MHz (donc les fréquences dans la bande de fréquences intermédiaires dont nous parlerons par la suite) ;
- un filtre passe-bande 17 dont la sortie est reliée au coupleur 19 et l'entrée est reliée à la sortie des moyens d'entrée 4 aptes à recevoir les signaux électriques terrestres reçus par l'antenne 3 ; le filtre passe-bande 17 laisse passer les fréquences comprises entre 470 et 862 MHz (dans les fréquences dans la bande UHF).

Le boîtier 21 comporte :
- un démultiplexeur 22 ;
- un modulateur 25 fonctionnant par exemple suivant un protocole asynchrone à accès aléatoire multiple à étalement de bande par modulation du type SPREAD ALOHA optimisé pour que le hub satellitaire puisse utiliser des moyens d'élimination d'interférences (un tel protocole est par exemple décrit dans le document US2010/0054131 (del Rio Herrero et al.));
- des moyens 26 de connexion sans fil à un réseau local du type WiFi, WiMax, BlueTooth, ZigBee ou KNX, ou de connexion filaire à un réseau local du type Ethernet ou similaire ;
- une connexion d'entrée/sortie 32 de type USB apte à délivrer des signaux vers un décodeur de télévision numérique 31 dit encore STB (« Set Top Box » en anglais) ;
- un démodulateur 33 fonctionnant selon la norme DVB-T (décrite dans la norme ETSI EN 300 744 « Digital Video Broadcasting (DVB); Framing structure, channel coding and modulation for digital terrestrial television ») ou DVB-T2 (décrite dans la norme ETSI EN 302 755 « Digital Video Broadcasting (DVB); Frame structure channel coding and modulation for a second generation digital terrestrial television broadcasting system (DVB-T2) », les extensions de la norme DVB-T2 telles que DVB-T2-lite étant décrites dans le « DVB BlueBook A122 »).

Le démultiplexeur 22 comporte :
- un filtre passe-bas 29 dont la sortie est reliée à un coupleur hyperfréquences 30 et l'entrée est reliée à la sortie du modulateur 25; le filtre passe-bas 29 laisse ici passer les fréquences inférieures à 400 MHz (fréquences intermédiaires) ;
- un filtre passe-bande 27 dont l'entrée est reliée au coupleur 30 et la sortie est reliée au démodulateur 33 apte à alimenter le décodeur 31 ; le filtre passe-bande 27 laisse passer les fréquences comprises entre 470 et 862 MHz (bande UHF).

Le câble coaxial 20 relie le boîtier 21 via son démultiplexeur 22 et l'unité d'émission/réception 2 via son multiplexeur 15.

Le principe de fonctionnement de l'installation 1 selon l'invention repose sur l'utilisation d'une partie réception (sans émission) par voie hertzienne terrestre formée par l'antenne « râteau » 3 et les moyens d'entrée 4 aptes à recevoir les signaux électriques terrestres reçus par l'antenne 3 et d'une partie émission en bande S formée par le bloc d'émission 9. La partie émission en bande S constitue une voie retour permettant la mise en place de services interactifs (votes, consommation de contenus à accès conditionnel par échange de clefs, commandes de nouveaux services tels que de la vidéo à la demande) ou de services M2M (contrôle d'appareils domestiques, surveillance, monitorage d'un paramètre mesuré par un capteur) avec un ajout de matériel relativement limité et peu coûteux sur une installation existante. L'antenne omnidirectionnelle 10 permet de transmettre les signaux en bande S soit directement vers le satellite 100 ou vers des collecteurs terrestres 101 dans l'hypothèse d'une augmentation de la capacité (dans ce cas, l'antenne 10 devra être préférentiellement légèrement directionnelle de façon à atteindre le collecteur 101).

L'ensemble des signaux est multiplexé sur le seul câble coaxial 20.

Les signaux terrestres reçus par l'antenne 3 puis les moyens d'entrée 4 sont transmis par le multiplexeur 15 sur le câble coaxial 20 après filtrage par le filtre passe-bande 17. Ces signaux sont ensuite récupérés au niveau du coupleur hyperfréquences 30 du démultiplexeur 22 puis filtrés par le filtre passe-bande 27 avant d'être transmis au démodulateur 33 DVB-T ou DVB-T2 puis à la STB 31 via la sortie USB 32, et/ou en parallèle directement à la STB 31 via un câble coaxial 35.

Les signaux à émettre en bande S sont modulés par le modulateur 25 sur la bande de fréquences intermédiaires (ici [370 MHz - 400 MHz] donnée à titre purement illustratif) et sont transmis sur le câble coaxial 20 par le démultiplexeur 22 après avoir été filtrés par le filtre passe bas 29. Ils sont ensuite transposés en fréquence vers la bande S en émission et amplifiés par l'amplificateur 11. On notera que la bande de fréquences intermédiaires est choisie de façon à limiter les pertes sur le câble coaxial. Si la longueur du câble est limitée, il serait toutefois possible de transmettre les signaux directement sur le câble coaxial sur la bande [1980 MHz - 2010 MHz] sans utiliser de bande de fréquences intermédiaires puisque les bandes de fréquences utilisées respectivement pour la bande S en voie aller et retour et pour la bande UHF sont disjointes, permettant donc d'éviter les interférences entre les signaux transmis sur le même câble.

La bande de fréquences intermédiaires choisie présente toutefois l'avantage d'être compatible avec la bande passante d'un câble coaxial standard.

La voie aller de réception terrestre en UHF permet par ailleurs de récupérer des informations utiles. Il peut s'agir par exemple de la fréquence ou de la largeur de bande qui seront utilisées en voie retour en bande S. Il peut s'agir également de mises à jour liées à la modulation/démodulation utilisée par le modem 23. On peut également récupérer un signal d'horloge très stable (i.e. avec une erreur en fréquence inférieure à 1 kHz) : ce signal d'horloge peut ensuite être transmis vers le bloc d'émission/réception afin d'être utilisé pour la transposition en fréquence à la place de l'oscillateur local moins précis. En d'autres termes, la voie aller de diffusion terrestre peut être fortement intégrée à la voie retour satellitaire puisque les signaux multiplex émis par voie terrestre peuvent contenir des informations de signalisation utiles pour le bon fonctionnement de l'installation. Ces informations peuvent inclure des paramètres d'émission à utiliser (fréquence, débit de type « symbol rate », code d'étalement), la charge du système, des clés de sécurité, ainsi que d'autres instructions pour l'installation. Le boîtier contient donc la logique nécessaire pour interpréter l'information présente dans la voie de diffusion terrestre et l'utiliser pour piloter l'émission de signaux. Ce dernier point suppose que le boîtier comporte des moyens (non représentés) pour extraire des informations de signalisation utilisées pour établir les paramètres d'émission en voie retour présentes dans une partie des signaux électriques terrestres.

Une seconde application particulièrement intéressante de l'installation selon l'invention concerne le domaine du M2M. Dans ce cas, la voie retour en bande S peut être utilisée pour transmettre des informations provenant d'un appareil se trouvant dans la maison tel qu'un système d'alarme ; ainsi, lorsque le système d'alarme se déclenche, un signal est transmis par le système d'alarme aux moyens de connexion sans fil 26 (par exemple des moyens fonctionnant en ZigBee) et un message indiquant la mise en route de l'alarme est transmis sur la voie retour en bande S.

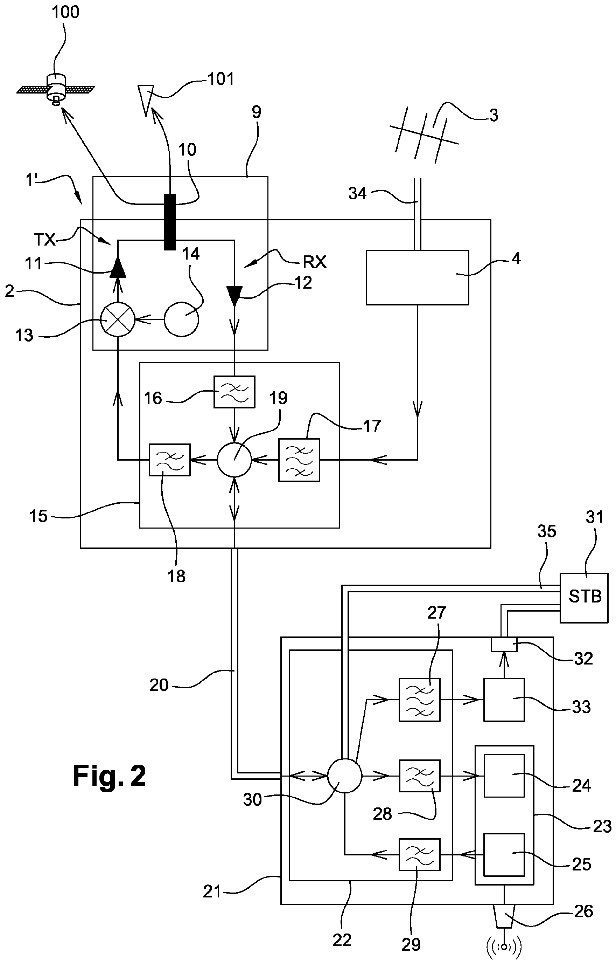

La figure 2 représente schématiquement une installation d'émission/réception 1' selon un second mode de réalisation de l'invention.

L'installation 1' de la figure 2 comporte l'ensemble des éléments de l'installation 1 de la figure 1 référencés de façon identique : la description de ces éléments telle que faite en référence à la figure 1 s'applique également aux éléments communs de l'installation 1' de la figure 2 et ne sera pas reprise dans ce qui suit.

L'installation 1' de la figure 2 se différencie de celle de la figure 1 en ce qu'elle comporte en outre une voie aller (voie de réception) satellitaire en plus de la voie aller terrestre.

Pour ce faire, le bloc d'émission 9 devient un bloc 9 d'émission/réception intégrant une voie de réception RX ; plus spécifiquement, l'antenne 10 est également adaptée pour la réception de signaux radioélectriques hyperfréquences émis par le satellite en bande S de transmission (par exemple dans la bande [2170 MHz - 2200 MHz]) et le bloc d'émission/réception 9 comporte en outre un amplificateur à faible bruit 12 pour amplifier le signal électrique représentatif de l'onde radioélectrique reçue en bande S de réception et provenant de l'antenne 10.

Le multiplexeur 15 comporte en outre un filtre passe-haut 16 dont la sortie est reliée au coupleur 19 et l'entrée est reliée à la sortie de l'amplificateur faible bruit 12 ; le filtre passe-haut 16 laisse passer les fréquences supérieures à 2170 MHz (donc les fréquences dans la bande S en réception).

Le boîtier 21 comporte en outre un modem 23 intégrant le modulateur 25, fonctionnant par exemple suivant un protocole asynchrone à accès aléatoire multiple à étalement de bande par modulation du type SPREAD ALOHA optimisé pour que le hub satellitaire puisse utiliser des moyens d'élimination d'interférences (un tel protocole est par exemple décrit dans le document US2010/0054131 (del Rio Herrero et al.) et un démodulateur 24, fonctionnant selon la norme DVB-SH (ETSI EN 302 583 Digital Video Broadcasting (DVB) ; Framing structure, channel coding and modulation for Satellite Services to Handheld devices (SH) below 3 GHz, January 2008).

Le démultiplexeur 22 comporte en outre un filtre passe-haut 28 dont l'entrée est reliée au coupleur 30 et la sortie est reliée à l'entrée du démodulateur 24 ; le filtre passe-haut 28 laisse passer les fréquences supérieures à 2170 MHz (bande S en réception).

Le principe de fonctionnement de l'installation 1' selon l'invention repose sur l'utilisation d'une partie réception (sans émission) par voie hertzienne terrestre et d'une partie émission/réception en bande S formée par le bloc d'émission/réception 9. Le fonctionnement de la partie réception par voie hertzienne et de la partie émission par le bloc 9 est identique à celui présenté en référence à la figure 1.

L'ensemble des signaux est multiplexé sur le seul câble coaxial 20.

S'agissant de la partie réception du bloc 9, les signaux satellitaires reçus en bande S (ici la bande [2170 MHz -2200 MHz] sont directement (sans modification de fréquence) transmis, après amplification par l'amplificateur 12, sur le câble coaxial 20 par le multiplexeur 15 après filtrage via le filtre passe-haut 16 et passage par le coupleur hyperfréquences 19. Ces signaux sont ensuite récupérés au niveau du coupleur hyperfréquences 30 du démultiplexeur 22 puis filtrés par le filtre passe-haut 28 avant d'être transmis au démodulateur DVB-SH 24.

On notera qu'on n'utilise pas de bande de fréquences intermédiaires pour les signaux reçus en bande S, la fréquence de ces derniers étant directement compatibles avec la bande passante du câble 20. Même si l'installation selon l'invention utilise avantageusement la bande S en émission, l'installation 1' selon l'invention permet également d'utiliser la bande S en réception.

On notera également que, selon le mode de réalisation de la figure 2, la voie aller de réception satellitaire en bande S permet (comme la voie aller de réception terrestre) de récupérer des informations de signalisation présentes dans le signal satellitaire. Ce dernier point suppose que le boîtier comporte des moyens (non représentés) pour extraire des informations de signalisation utilisées pour établir les paramètres d'émission en voie retour présentes dans une partie des signaux satellitaires reçus en bande S.

Bien entendu, l'invention n'est pas limitée au mode de réalisation qui vient d'être décrit.

Ainsi, l'invention a été plus particulièrement décrite dans le cas d'une utilisation en bande S mais elle peut également être utilisée en bande C.

## Revendications

1. Installation d'émission/réception (1, 1') de signaux radioélectriques hyperfréquences comportant :
- une unité d'émission/réception (2) comportant :
∘ des moyens (4) aptes à recevoir des signaux électriques, dits signaux électriques terrestres, issus d'une transformation de signaux radioélectriques reçus par voie hertzienne terrestre ;
∘ des moyens (10) pour
▪ transformer des signaux électriques modulés selon un protocole à étalement de spectre, dits signaux électriques satellitaires, en signaux radioélectriques hyperfréquences aptes à être émis par voie satellitaire et
▪ émettre vers un satellite lesdits signaux radioélectriques hyperfréquences obtenus après transformation desdits signaux électriques satellitaires ;
∘ des moyens d'amplification (11) desdits signaux électriques satellitaires ;
- un boîtier (21) incluant un modulateur (25) de signaux électriques selon un protocole à étalement de spectre pour l'obtention de signaux électriques satellitaires ;
- un câble coaxial (20) reliant l'unité d'émission/réception (2) et le boîtier (21) apte à :
∘ véhiculer lesdits signaux électriques terrestres de ladite unité d'émission/réception (2) vers ledit boîtier (21) ;
∘ véhiculer les signaux électriques satellitaires issus dudit modulateur (25) dudit boîtier (21) vers ladite unité d'émission/réception (2) ;
l'installation d'émission/réception (1, 1') étant en outre **caractérisée en ce que** lesdits signaux électriques satellitaires sont modulés dans une bande de fréquences d'émission qui est la bande S ou la bande C.

2. Installation d'émission/réception (1, 1') selon la revendication précédente **caractérisée en ce que** ledit modulateur de signaux électriques comporte des moyens de mise en oeuvre d'un protocole à étalement de spectre fonctionnant selon un protocole asynchrone à accès aléatoire multiple à étalement de spectre.

3. Installation d'émission/réception (1, 1') selon l'une des revendications précédentes **caractérisée en ce qu'**il comporte des moyens pour extraire, à partir des signaux électriques terrestres, des informations de signalisation pour l'établissement des paramètres d'émission.

4. Installation d'émission/réception (1, 1') selon l'une des revendications précédentes **caractérisée en ce que** lesdits moyens d'émission vers un satellite desdits signaux radioélectriques hyperfréquences obtenus après transformation desdits signaux électriques satellitaires sont une antenne omnidirectionnelle ou présentant une faible directivité.

5. Installation d'émission/réception (1, 1') selon l'une des revendications précédentes **caractérisée en ce que** ledit modulateur de signaux électriques selon un protocole à étalement de spectre est apte à moduler les signaux dans une bande de fréquence intermédiaire, ladite unité d'émission réception comportant des moyens pour remonter la fréquence des signaux modulés dans ladite bande de fréquence intermédiaire vers une bande de fréquence d'émission.

6. Installation d'émission/réception (1, 1') selon la revendication précédente **caractérisée en ce que** lesdits moyens pour remonter la fréquence comportent un oscillateur local générant un signal de transposition à une fréquence d'oscillation apte à être ajoutée aux fréquences de ladite bande de fréquence intermédiaire.

7. Installation d'émission/réception (1, 1') selon la revendication 5 **caractérisée en ce que** ledit boîtier comporte des moyens pour extraire un signal d'horloge à partir d'un signal électrique et des moyens pour transmettre ledit signal d'horloge aux dits moyens pour remonter la fréquence de sorte que la fréquence dudit signal d'horloge soit apte à être ajoutée aux fréquences de ladite bande de fréquence intermédiaire.

8. Installation d'émission/réception (1, 1') selon l'une des revendications précédentes **caractérisée en ce que** lesdits signaux électriques satellitaires sont modulés dans la bande de fréquences d'émission dite bande S et plus particulièrement dans la bande [1980 MHz ; 2010 MHz].

9. Installation d'émission/réception (1, 1') selon l'une des revendications précédentes **caractérisée en ce que** lesdits moyens de réception de signaux radioélectriques hyperfréquences transmis par voie hertzienne terrestre sont aptes à recevoir des signaux radioélectriques hyperfréquences dans la bande UHF ou VHF.

10. Installation d'émission/réception (1, 1') selon l'une des revendications précédentes **caractérisée en ce que** ledit boîtier inclut un démodulateur desdits signaux électriques terrestres tel qu'un démodulateur apte à démoduler des signaux modulés selon la norme DVB-T, DVB-T2 ou DVB-T2-lite.

11. Installation d'émission/réception (1, 1') selon l'une des revendications précédentes **caractérisée en ce que** ledit boîtier comporte des moyens de connexion sans fil tels que des moyens WiFi, WiMax, BlueTooth, ZigBee ou KNX ou filaire tels que Ethernet.

12. Installation d'émission/réception (1, 1') selon l'une des revendications précédentes **caractérisé en ce que** lesdits moyens d'émission vers un satellite desdits signaux radioélectriques hyperfréquences sont également des moyens d'émission vers une station de réception terrestre desdits signaux radioélectriques hyperfréquences.

13. Unité d'émission/réception (2) destinée à coopérer au sein de l'installation d'émission/réception (1, 1') de signaux radioélectriques hyperfréquences selon l'une des revendications 1 à 12 avec un boîtier (21) incluant un modulateur (25) de signaux électriques selon un protocole à étalement de spectre pour l'obtention de signaux électriques satellitaires, l'unité d'émission/réception (2) comportant :
- des moyens (4) aptes à recevoir des signaux électriques, dits signaux électriques terrestres, issus d'une transformation de signaux radioélectriques reçus par voie hertzienne terrestre ;
- des moyens (10) pour
∘ transformer des signaux électriques modulés selon un protocole à étalement de spectre, dits signaux électriques satellitaires, en signaux radioélectriques hyperfréquences aptes à être émis par voie satellitaire et
∘ émettre vers un satellite lesdits signaux radioélectriques hyperfréquences obtenus après transformation desdits signaux électriques satellitaires ;
- des moyens d'amplification desdits signaux électriques satellitaires ; l'unité d'émission/réception (2) étant apte à :
- transmettre lesdits signaux électriques terrestres vers le boîtier (21) via un câble coaxial (20) et
- recevoir lesdits signaux électriques satellitaires dudit boîtier (21) via le câble coaxial (20) ;
l'unité d'émission/réception (2) étant en outre **caractérisée en ce que** lesdits signaux électriques satellitaires sont modulés dans une bande de fréquences d'émission qui est la bande S ou la bande C.

14. Boîtier (21) destiné à coopérer au sein de l'installation d'émission/réception (1, 1') de signaux radioélectriques hyperfréquences selon l'une des revendications 1 à 12 avec l'unité d'émission/réception (2) selon la revendication 13, le boîtier (21) incluant un modulateur (25) de signaux électriques selon un protocole à étalement de spectre pour l'obtention de signaux électriques satellitaires ;
le boîtier (21) étant apte à :
- recevoir des signaux électriques terrestres de l'unité d'émission/réception (2) via un câble coaxial (20) et
- transmettre lesdits signaux électriques satellitaires à l'unité d'émission/réception (2) via le câble coaxial (20) ;
le boîtier (21) étant en outre **caractérisée en ce que** lesdits signaux électriques satellitaires sont modulés dans une bande de fréquences d'émission qui est la bande S ou la bande C.

## Patentansprüche

1. Sende- / Empfangsanlage (1, 1') von funkelektrischen Hochfrequenzsignalen, umfassend:
- eine Sender- / Empfanseinheit (2), umfassend:
∘ Mittel (4), die geeignet sind, elektrische Signale, bezeichnet als terrestrische elektrische Signale, zu empfangen, die aus einer Transformation von funkelektrischen Signalen stammen, die per terrestrischem Funkübertragungskanal empfangen wurden;
∘ Mittel (10) zur
▪ Transformation von gemäß einem gespreizten Spektrumsprotokoll modulierten Signalen, bezeichnet als elektrische Satellitensignale, in funkelektrische Hochfrequenzsignale, die geeignet sind, per Satellitenkanal ausgegeben zu werden und
▪ Ausgabe der nach der Transformation der genannten elektrischen Satellitensignale genannten funkelektrischen Hochfrequenzsignale auf einen Satelliten
∘ Verstärkungsmittel (11) der genannten elektrischen Satellitensignale;
- ein Gehäuse (21), das einen Modulator (25) elektrischer Signale gemäß einem gespreizten Spektrumsprotokoll einschließen, um elektrische Satellitensignale zu erhalten;
- ein koaxiales Kabel (20), das die Sender- / Empfängereinheit (2) und das Gehäuse (21) miteinander verbindet und geeignet ist:
∘ die genannten terrestrischen elektrischen Signale der genannten Sende- / Empfangseinheit (2) zu dem genannten Gehäuse (21) zu übertragen;
∘ die elektrischen Satellitensignale, die aus dem genannten Modulator (25) des genannten Gehäuses (21) stammen, auf die genannte Sende- / Empfangseinheit (2) zu übertragen;
wobei die Sende- / Empfangsanlage (1, 1') darüber hinaus **dadurch gekennzeichnet ist, dass** die genannten elektrischen Satellitensignale in einem Senderfrequenzband moduliert sind, das das Band S oder das Band C ist.

2. Sende- / Empfangsanlage (1, 1') gemäß dem voranstehenden Anspruch, **dadurch gekennzeichnet, dass** der genannte Modulator elektrischer Signale Umsetzungsmittel eines gespreizten Spektrumsprotokolls, das gemäß einem asynchronen Protokoll mit multiplem zufälligem Zugang mit gespreiztem Spektrum funktioniert, umfasst.

3. Sende- / Empfangsanlage (1, 1') gemäß einem der voranstehenden Ansprüche, **dadurch gekennzeichnet, dass** sie Mittel umfasst, um ausgehend von terrestrischen elektrischen Signalen Meldeinformationen für Sendeparameter zu extrahieren.

4. Sende- / Empfangsanlage (1, 1') gemäß einem der voranstehenden Ansprüche, **dadurch gekennzeichnet, dass** die genannten Sendemittel die genannten, nach der Transformation der genannten elektrischen Satellitensignale erhaltenen funkelektrischen Hochfrequenzsignale zu einem Satelliten eine ungerichtete oder eine Antenne ist, die eine geringe Direktivität aufweist.

5. Sende- / Empfangsanlage (1, 1') gemäß einem der voranstehenden Ansprüche, **dadurch gekennzeichnet, dass** der genannte Modulator elektrischer Signale gemäß einem gespreizten Spektrumsprotokoll geeignet ist, die Signale in einem intermediären Frequenzband zu modulieren, wobei die genannte Sende- / Empfangseinheit Mittel zur Rückverfolgung der modulierten Signale in dem genannten intermediären Frequenzband zu einem Sendefrequenzband umfasst.

6. Sende- / Empfangsanlage (1, 1') gemäß dem voranstehenden Anspruch, **dadurch gekennzeichnet, dass** die genannten Mittel zur Rückverfolgung der Frequenz einen lokalen Oszillator umfassen, der ein Transpositionssignal in einer Oszillationsfrequenz generiert, die geeignet ist, zu den Frequenzen des genannten intermediären Frequenzbandes hinzugefügt zu werden.

7. Sende- / Empfangsanlage (1, 1') gemäß Anspruch 5, **dadurch gekennzeichnet, dass** das genannte Gehäuse Mittel zum Extrahieren eines Uhrensignals ausgehend von einem elektrischen Signal und Mittel zum Übertragen des genannten Uhrensignals auf die genannten Mittel zur Rückverfolgung derart umfasst, dass die Frequenz des genannten Uhrensignals geeignet ist, um zu den Frequenzen des genannten intermediären Frequenzbandes hinzugefügt zu werden.

8. Sende- / Empfangsanlage (1, 1') gemäß einem der voranstehenden Ansprüche, **dadurch gekennzeichnet, dass** die genannten elektrischen Satellitensignale in dem Sendefrequenzband, bezeichnet als Band S, und ganz besonders in dem Band [1980 MHz; 2010 MHz], moduliert sind.

9. Sende- / Empfangsanlage (1, 1') gemäß einem der voranstehenden Ansprüche, **dadurch gekennzeichnet, dass** die genannten Empfangsmittel funkelektrischer Hochfrequenzsignale, die per terrestrischem Funkübertragungskanal übertragen werden, geeignet sind, funkelektrische Hochfrequenzsignale in dem Band UHF oder VHF zu empfangen.

10. Sende- / Empfangsanlage (1, 1') gemäß einem der voranstehenden Ansprüche, **dadurch gekennzeichnet, dass** das genannte Gehäuse einen Demodulator der genannten elektrischen terrestrischen Signale einschließt, wie z. B. einen Demodulator, der geeignet ist, gemäß der Norm DVB-T, DVB-T2 oder DVB-T2-lite modulierte Signale zu demodulieren.

11. Sende- / Empfangsanlage (1, 1') gemäß einem der voranstehenden Ansprüche, **dadurch gekennzeichnet, dass** das genannte Gehäuse drahtlose Anschlussmittel, wie z. B. WiFi-, WiMAx-, BlueTooth-, ZigBee- oder KNX-Mittel oder mit Draht wie z. B. Ethernet umfasst.

12. Sende- / Empfangsanlage (1, 1') gemäß einem der voranstehenden Ansprüche, **dadurch gekennzeichnet, dass** die genannten Sendemittel der genannten funkelektrischen Hochfrequenzsignale auf einen Satelliten ebenfalls Sendemittel auf eine terrestrische Empfangsstation der genannten funkelektrischen Hochfrequenzsignale sind.

13. Sende- / Empfangseinheit (2), die zum Zusammenwirken innerhalb der Sende- / Empfangsanlage (1, 1') funkelektrische Hochfrequenzsignale gemäß einem der Ansprüche 1 bis 12 mit einem Gehäuse (21) bestimmt ist, das einen Modulator (25) elektrischer Signale gemäß einem gespreizten Spektrumsprotokoll einschließt, um elektrische Satellitensignale zu erhalten, wobei die Sende- / Empfangseinheit (2) umfasst:
- Mittel (4), die geeignet sind, um elektrische Signale, bezeichnet als elektrische terrestrische Signale, zu empfangen, die aus einer Transformation von per terrestrischem Funkübertragungskanal empfangenen funkelektrischen Signalen stammen;
- Mittel (10) zur
∘ Transformation von gemäß einem gespreiztem Spektrumsprotokoll modulierten Signalen, bezeichnet als elektrische Satellitensignale, in funkelektrische Hochfrequenzsignale, die geeignet sind, per Satellitenkanal ausgegeben zu werden und
∘ Ausgabe der nach der Transformation der genannten elektrischen Satellitensignale erhaltenen genannten funkelektrischen Hochfrequenzsignale auf einen Satelliten;
- Verstärkungsmittel der genannten elektrischen Satellitensignale; wobei die Sende- / Empfangseinheit (2) geeignet ist, um:
- die genannten elektrischen terrestrischen Signale über ein koaxiales Kabel (20) auf das Gehäuse (21) zu übertragen und
- die genannten elektrischen Satellitensignale des genannten Gehäuses (21) über das koaxiale Kabel (20) zu empfangen;
wobei die Sende- / Empfangseinheit (2) darüber hinaus **dadurch gekennzeichnet ist, dass** die genannten elektrischen Satellitensignale in einem Sendefrequenzband moduliert sind, das das Band S oder das Band C ist.

14. Gehäuse (21), das zum Zusammenwirken innerhalb der Sende- / Empfangsanlage (1, 1') funkelektrische Hochfrequenzsignale gemäß einem der Ansprüche 1 bis 12 mit der Sende- / Empfangseinheit (2) gemäß Anspruch 13 bestimmt ist, wobei das Gehäuse (21) einen Modulator (25) elektrischer Signale gemäß einem gespreizten Spektrumsprotokoll für den Erhalt von elektrischen Satellitensignalen einschließt;
wobei das Gehäuse (21) geeignet ist, um
- terrestrische elektrische Signale von der Sende- / Empfangseinheit (2) über ein koaxiales Kabel (20) zu empfangen und
- die genannten elektrischen Satellitenkabel über das koaxiale Kabel (20) auf die Sende- / Empfangseinheit (2) zu übertragen;
wobei das Gehäuse (21) darüber hinaus **dadurch gekennzeichnet ist, dass** die genannten elektrischen Satellitensignale in einem Sendefrequenzband moduliert sind, das das Band S oder das Band C ist.

## Claims

1. A facility for transmitting/receiving (1, 1') microwave radio signals including:
- a transmitting/receiving unit (2) including:
∘ means (4) able to receive electrical signals, called terrestrial electrical signals, coming from a transformation of radio signals received by terrestrial radio relay channel;
∘ means (10) for
▪ transforming electrical signals modulated according to a spread spectrum protocol, called satellite electrical signals, into microwave radio signals able to be transmitted by satellite and
▪ transmitting to a satellite said microwave radio signals obtained after transforming said satellite electrical signals;
∘ means for amplifying (11) said satellite electrical signals;
- a casing (21) including a modulator (25) of electrical signals according to a spread spectrum protocol for obtaining satellite electrical signals;
- a coaxial cable (20) connecting the transmitting/receiving unit (2) and the casing (21) able to:
∘ convey said terrestrial electrical signals from said transmitting/receiving unit (2) to said casing (21);
∘ convey the satellite electrical signals coming from said modulator (25) from said casing (21) to said transmitting/receiving unit (2);
the transmitting/receiving facility (1, 1') being further **characterised in that** said satellite electrical signals are modulated in a transmission frequency band which is the S-band or C-band.

2. The transmitting/receiving facility (1, 1') according to the preceding claim, **characterised in that** the modulator of electrical signals includes means for implementing a spread spectrum protocol operating according to a spread spectrum multiple random access asynchronous protocol.

3. The transmitting/receiving facility (1, 1') according to one of the preceding claims, **characterised in that** it includes means for extracting, from the terrestrial electrical signals, signalling information for establishing transmitting parameters.

4. The transmitting/receiving facility (1, 1') according to one of the preceding claims, **characterised in that** said means for transmitting to a satellite said microwave radio signals obtained after transforming said satellite electrical signals are an omnidirectional antenna or an antenna having a low directivity.

5. The transmitting/receiving facility (1, 1') according to one of the preceding claims, **characterised in that** said modulator of electrical signals according to a spread spectrum protocol is able to modulate the signals in an intermediate frequency band, said transmitting/receiving unit including means for raising the frequency of the signals modulated in said intermediate frequency band to a transmitting frequency band.

6. The transmitting/receiving facility (1, 1') according to the preceding claim, **characterised in that** said means for raising the frequency include a local oscillator generating a signal for transposing to an oscillation frequency able to be added to the frequencies of said intermediate frequency band.

7. The transmitting/receiving facility (1, 1') according to claim 5, **characterised in that** said casing includes means for extracting a clock signal from an electrical signal and means for transmitting said clock signal to said means for raising the frequency such that the frequency of said clock signal is able to be added to the frequencies of said intermediate frequency band.

8. The transmitting/receiving facility (1, 1') according to one of the preceding claims, **characterised in that** said satellite electrical signals are modulated in the transmitting frequency band called S-band and more particularly in the [1980 MHz; 2010 MHz] band.

9. The transmitting/receiving facility (1, 1') according to one of the preceding claims, **characterised in that** said means for receiving microwave radio signals transmitted by terrestrial radio relay channel are able to receive microwave radio signals in the UHF or VHF band.

10. The transmitting/receiving facility (1, 1') according to one of the preceding claims, **characterised in that** said casing includes a demodulator of said terrestrial electrical signals such as a demodulator able to demodulate signals modulated according to DVB-T, DVB-T2 or DVB-T2-lite standard.

11. The transmitting/receiving facility (1, 1') according to one of the preceding claims, **characterised in that** said casing includes wireless connection means such as WiFi, WiMax, Bluetooth, ZigBee or KNX means or wired means such as Ethernet.

12. The transmitting/receiving facility (1, 1') according to one of the preceding claims, **characterised in that** said means for transmitting to a satellite said microwave radio signals are also means for transmitting to a terrestrial receiving station said microwave radio signals.

13. A transmitting/receiving unit (2) for cooperating within the facility for transmitting/receiving (1, 1') microwave radio signals according to one of claims 1 to 12 with a casing (21) including a modulator (25) of electrical signals according to a spread spectrum protocol for obtaining satellite electrical signals, the transmitting/receiving unit (2) including:
- means (4) able to receive electrical signals, called terrestrial electrical signals, coming from a transformation of radio signals received by terrestrial radio relay channel;
- means (10) for
∘ transforming electrical signals modulated according to a spread spectrum protocol, called satellite electrical signals, into microwave radio signals able to be transmitted by satellite and
∘ transmitting to a satellite said microwave radio signals obtained after transforming said satellite electrical signals;
- means for amplifying said satellite electrical signals;
the transmitting/receiving unit (2) being able to:
- transmit said terrestrial electrical signals to the casing (21) via a coaxial cable (20) and
- receive said satellite electrical signals from said casing (21) via the coaxial cable (20);
the transmitting/receiving unit (2) being further **characterised in that** said satellite electrical signals are modulated in a transmitting frequency band which is the S-band or C-band.

14. A casing (21) for cooperating within the facility for transmitting/receiving (1, 1') microwave radio signals according to one of claims 1 to 12 with the transmitting/receiving unit (2) according to claim 13, the casing (21) including a modulator (25) of electrical signals according to a spread spectrum protocol for obtaining satellite electrical signals;
the casing (21) being able to:
- receive terrestrial electrical signals from the transmitting/receiving unit (2) via a coaxial cable (20) and
- transmit said satellite electrical signals to the transmitting/receiving unit (2) via the coaxial cable (20);
the casing (21) being further **characterised in that** said satellite electrical signals are modulated in a transmitting frequency band which is the S-band or C-band.
